# EUROPEAN PATENT SPECIFICATION

(11) **EP 4 592 113 B1**
(45) Date of publication and mention of the grant of the patent: **02.09.2026**
(21) Application number: 24154080.6
(22) Date of filing: 26.01.2024
(51) Int. Cl.: B60J 7/043, B60J 7/19

(54) **ROOF SYSTEM**
DACHSYSTEM
SYSTÈME DE TOIT

(43) Date of publication of application: 30.07.2025
(73) Proprietor: Inalfa Roof Systems Group B.V., 5807 GW Oostrum (NL)
(72) Inventor: Nellen, Marcel Johan Christiaan, 5815 AR MERSELO (NL); Geurts, Ruud, 5988 HA HELDEN (NL)
(74) Representative: De Vries & Metman

(56) References cited:
- EP-A1- 2 829 425
- DE-A1- 102019 107 945
- US-B2- 8 328 270

## Description

The invention relates to a roof system according to the preamble of claim 1.

In a known roof system of such a type, for example disclosed in DE 10 2019 107945 A1, the first locking mechanism is located at the front mechanism, whereas, likewise, the second locking mechanism is located at the tilting mechanism. It is noted, that according to the state of the art, the front mechanism and first locking mechanism (as well as the tilting mechanism and the second locking mechanism) not only are located at the same position, but also may be combined or integrated into a single mechanism (for example involving a number of specially designed cooperating curved tracks, cams, levers etcetera, as is known per se).

A disadvantage of such a design is that the overall constructional height at the front mechanism as well as at the tilting mechanism is rather large, which results in the need for a large headroom package.

It is an object of the present invention to provide an improved design.

Thus, in accordance with the present invention the roof system is characterized in accordance with the characterizing part of claim 1.

In accordance with the present invention the front mechanism and the first locking mechanism (and optionally the tilting mechanism and the second locking mechanism) are taken apart (separated) in such a manner that the first locking mechanism is located at a guide rail section located completely ahead of and remote from the front mechanism or located completely rearward of and remote of the tilting mechanism (and optionally such that likewise the second locking mechanism is located at a guide rail section located completely ahead of and remote from the front mechanism or located completely rearward of and remote of the tilting mechanism). This allows to reduce the constructional height(which otherwise among others would be defined by the locking mechanisms) at the front mechanism (and optionally at the tilting mechanism).

For safeguarding the proper operation of the roof system, especially the locking of the front mechanism and thus the panel (and optionally the locking of the tilting mechanism), the first locking mechanism is operatively connected to the front mechanism by a first link (and optionally the second locking mechanism is operatively connected to the tilting mechanism by a second link).

The operating part for the front mechanism controls the operation of the front mechanism regarding lifting the forward edge of the panel and thereafter moving the panel in a rearward direction, whereas the first link, when locked (at its end engaging the first locking mechanism and remote from the front mechanism) by means of the first locking mechanism, keeps the front mechanism (and thus the panel) at a fixed longitudinal position with respect to the vehicle (without, however, obstructing a movement of the front mechanism for only lifting the forward end of the panel without moving the panel in the rearward direction) until an unlocking is needed for allowing the panel to shift to the rear.

It is noted that the first link generally will be connected directly to the front mechanism, but it also is conceivable that the first link is indirectly connected to the front mechanism through the panel (because such a front mechanism is connected to the panel).

In one preferred embodiment it is conceivable that the first link also defines the operating part for the front mechanism, and thus is responsible too for lifting the forward edge of the panel and shifting the panel rearward.

The second link is responsible for locking the tilting mechanism (in the tilt position of the panel). However, in one embodiment the second link also defines the operating part for the tilting mechanism. As a result, then, the second link will also control (or cause the movement of) the tilting mechanism for lifting the rear end of the panel to the tilt position in addition to locking the tilting mechanism in a position in which said rear end is in the lifted, tilt position (after which the entire tilting mechanism basically remains stationary while the panel, as driven by the front mechanism, slides to the rear relative to the tilting mechanism). The locking of the second link is caused at the second locking mechanism where the respective end of the second link will be locked.

Although it is conceivable that the first and second locking mechanism are located at different positions (for example one ahead of the front mechanism and one rearward of the linking mechanism), preferably the first locking mechanism and the second locking mechanism are located at the same guide rail section. As will appear below, this guide rail section may have different locations and orientations.

In one embodiment, said guide rail section is a prolongation of the guide rail. As such, the guide rail section may be an integral part of the guide rail, or may be a separate section that (by any appropriate means) is joined to the guide rail.

Alternatively, said guide rail section and the guide rail are separate parts with a gap therebetween. Such a gap, for example, may be useful in accommodating parts of the vehicle or the roof system and makes the application of the roof system more versatile, as well as its mounting and dismounting simpler.

Depending, among others, from the geometry of the roof of the vehicle, the guide rail section and the guide rail may extend in line with each other or may extend at an angle with respect to each other, said angle being different from 0 or 180 degrees. As such it is possible, for example, to offer the guide rail section an orientation which copes with a specific shape of the vehicle roof, for example when the vehicle roof tapers in a rearward direction, or to position the guide rail section (and thus the locking mechanism) in an optimal manner with respect to a number of different requirements.

Preferably said guide rail section, as seen in a top plan view, is located outside the boundaries of the roof opening, such as, in an embodiment, rearward of the roof opening (for example below a fixed panel extending rearward of the roof opening). Generally, at such a location more space for accommodating the locking mechanisms will be available, whereas the unobstructed dimensions of the roof opening will be optimized.

However, under certain circumstances it also may be conceivable that said guide rail section, as seen in a top plan view, is located inside the boundaries of the roof opening and preferably near to the forward or rearward edge of the roof opening. In such a case the orientation of the guide rail section and the respective locking mechanism then may be chosen, for example, to be (substantially) in the widthwise direction of the vehicle such as to occupy as little space as possible in the lengthwise direction for optimizing the unobstructed dimension of the roof opening.

The at least one operating part is responsible for in a specific timed manner causing the operation of the front mechanism, first locking mechanism, tilting mechanism and second locking mechanism such that the panel, starting from its closed position, firstly moves to the tilted position, next to a position with also its forward end lifted and finally to its fully opened position (in this aspect, the phrase 'in a specific timed manner' intends to express that the operating part determines the specific moments in time, and relations therebetween, at which the mentioned mechanisms move in a respective desired manner and thus determines a specific order of kinematic movement of these mechanisms). Although each of these mechanisms may have its own operating part (which then should be properly synchronized), in one embodiment at least two of the front mechanism, first locking mechanism, tilting mechanism and second locking mechanism share a common operating part, resulting in an automatic synchronization of the movements of such mechanisms (as is required for the correct functioning - opening and closing- of the panel). Such a combined operating part may comprise a control member which is slidable in the guide rail section, and which is driven by a drive member, such as a push-pull cable. Such a control member may comprise curved tracks and other components for the timed control of the mechanisms, as is known per se.

It should be noted that, although a drive member, operating parts and links are mentioned here, a distinction between such parts may not always be very clear because functions of such parts may overlap, and such a drive member or link then also may be seen as a part of the operating member.

The operating part may be one of a group at least comprising a spindle motor, a linear motor and a drive cable driven by an electric motor.

The front mechanism and/or the first locking mechanism and/or the tilting mechanism and/or the second locking mechanism comprise(s) cooperating curved tracks and cams, but also other components such as levers, springs etcetera, as is well known from the state of the art. The precise manner in which these mechanisms operate can vary.

The first link and/or the second link may comprise(s) one of a group at least comprising a push/pull cable and a rod.

When the operating part is a push/pull cable, it may enter the guide rail at the gap between the guide rail section and the remainder of the guide rail (when these guide rail parts indeed are separate parts), which allows to choose an alternative or optimal routing of such a drive member, especially when the drive motor is located at the front.

The roof system in accordance with the present invention offers a number of advantages, of which the following may be mentioned (without the intention to give a limitative list of advantages):
- the new position of the locking mechanism for the front mechanism (or for the tilting mechanism), for example underneath a rear panel (behind the roof opening), creates additional space at the front mechanism (or at tilting mechanism) to save more package and offers more headroom for occupants of the vehicle;
- interference between glass screws and the front mechanism/tilting mechanism is limited or even eliminated;
- by making the front mechanism/tilting mechanism less complex, the package can be reduced, but also strength, stability, and robustness can be improved;
- by moving the first and second locking mechanisms (for example to the rear underneath a rear panel), both locking mechanisms can be positioned in an area where package for the locking mechanism is less critical, which means that there is more space available to improve robustness of the locking mechanisms and to improve (reduce) locking noises on system level;
- moving the locking mechanisms (such as to the rear underneath a rear panel) means that they will be more isolated against producing noises for the driver, and they are protected against misuse since they are not visible/reachable anymore. Also, dust/pollutions cannot enter the locking mechanisms anymore which is better for lifetime endurance and for avoiding risks of malfunctions;
- the guide rail in the open position of the panel will appear much cleaner visually;
- also, other parts of the roof system will look cleaner, which means that less covers (inner and outer covers) are needed, which can save package;
- the drive member (e.g. a drive cable) does not have to go underneath a wind deflector positioned ahead of the roof opening, which would lead to going into the guide with a bend from underneath, creating complex shapes and machining of the guide. It decreases complexity of the guide and other roof system parts (such as a frame) in the front area;
- the front mechanism (and possibly the tilting mechanism) will get shorter in the longitudinal direction, which improves the slide opening in case of smaller panels;
- a (rear or forward) locking-driving module can be created which has a driven part. This creates options for operating the driven part with several alternatives, like traditional drive cables with motor, spindle motor, linear motors, etc...;
- such a locking-driving module can be positioned anywhere in the roof area, also for example perpendicular in cross members of the vehicle roof.

Hereinafter the invention will be elucidated while referring to the drawings, in which:
Figures 1 and 2 are schematic perspective views of a vehicle roof with a roof system with a panel in a closed (tilted) and open position, respectively;
Figures 3 and 4 in schematic top plan and elevational side views, respectively, illustrate a state-of-the-art roof system;
Figure 5 is a schematic side elevational view of an embodiment of a roof system according to the invention, and
Figures 6a-6d in schematic top plan views illustrate different embodiments of the roof system according to the present invention.

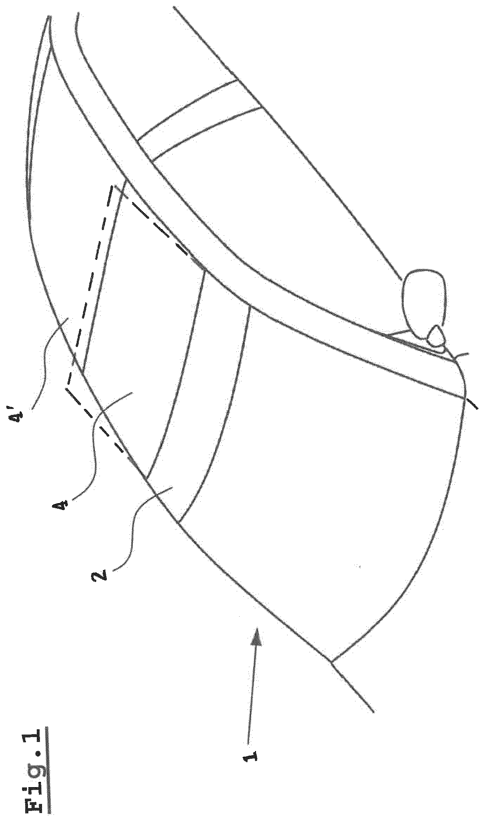

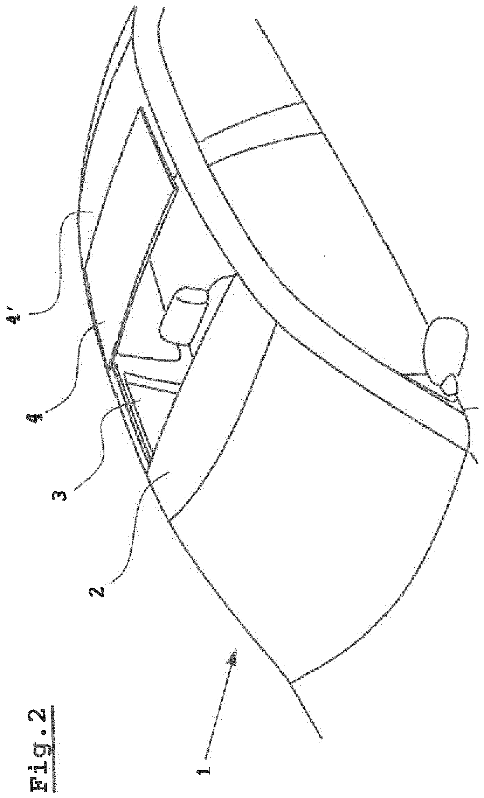

Firstly, referring to Figs. 1 and 2, a roof system for a vehicle 1 is schematically illustrated in a perspective view and in two different positions. In a fixed roof 2 of the vehicle 1 a roof opening 3 is defined which can be closed (Fig. 1) and opened (Fig. 2) by a movable closure, here a rigid, at least partly (semi)transparent first panel 4, made of glass, plastic material, or the like. The roof system further may include a second panel 4' which is generally a fixed panel, but which may be movable as well.

The roof system is a so-called top-loaded roof system in which a stationary part or frame of the roof system is introduced onto and around the roof opening 3 from above, to be rested on a respective part of the fixed roof, normally a flange of a roof beam (as is generally known). The stationary part of the roof system then is attached to the fixed roof 2 of the vehicle 1 in a suitable manner, preferably by gluing, but also welding and bolting would be possible, depending on the materials used.

The roof system shown here is a so-called spoiler roof in which panel 4 from its closed position is movable upwardly (at least with its rear end) and then rearwardly to positions above the fixed roof 2, or in this case above rear panel 4'. The operating mechanism for causing such movements, in particular supports for the panel 4, remains mainly within the roof opening 3, contrary to a top slider roof in which rear supports of the panel 4 slide in guide rails that extend or are extended to positions behind the roof opening 3.

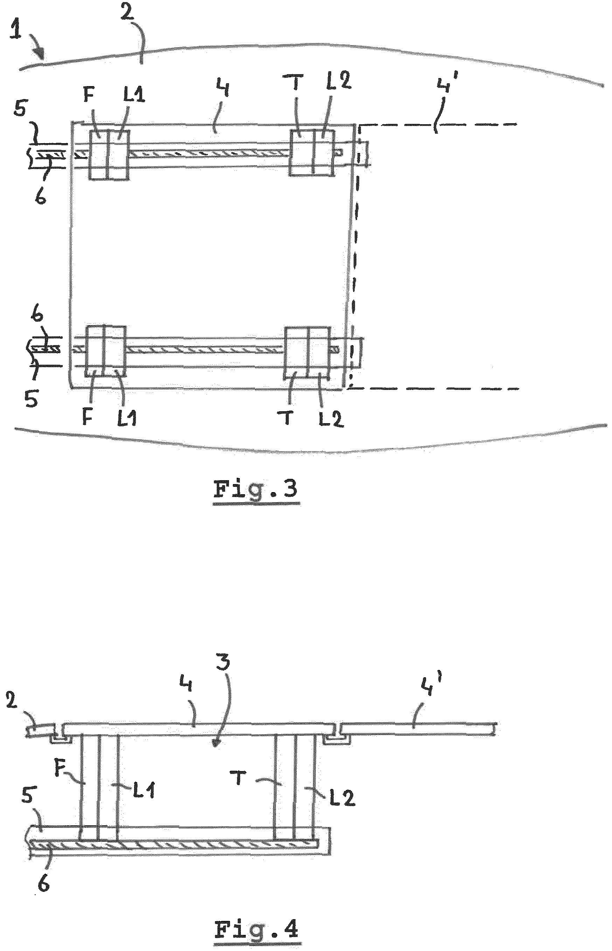

In figures 3-6 the left side always corresponds with the forward end of the vehicle.

Referring to figures 3 and 4, the basic elements of such a roof system and their functional relations will be explained with relation to a known roof system of the type to which the invention relates. Figure 3 is a schematic top plan view, and figure 4 is a schematic side elevational view showing only elements at one lateral side, and one should understand that similar (mostly mirror-shaped) elements generally will be provided at the other lateral side.

The roof system, apart from the roof opening 3 in the fixed roof 2 of the vehicle 1, firstly comprises two guide rails 5 extending in a longitudinal direction of said vehicle at opposite lateral sides of the roof opening 3 and a panel 4 which is movable relative to the guide rails 5 between a closed position (see solid lines in figure 1) in which the roof opening 3 is closed, a tilted position (see dotted lines in figure 1) in which a rear end of the panel 4 is lifted and a fully opened position (see figure 2) in which also the forward end of the panel 3 is lifted and the panel is shifted to the rear over the fixed roof (or over the fixed panel 4').

The roof system further is provided with front mechanisms F cooperating with each of the guide rails 5 and the panel 4 for lifting the forward end of the panel and for shifting the panel to the rear, as well as first locking mechanisms L1 cooperating with each of the guide rails 5 and the front mechanism F for maintaining the panel in its closed position (it should be noted that the closed position also can be a position in which the forward end of the panel 4 already has been lifted to some extent but in which the panel has not yet been shifted to the rear). Although a first locking mechanism L1 is shown for each guide rail 5, it also is possible to use a single first locking mechanism at one of the guide rails 5 only.

The front mechanism F and cooperating first locking mechanism L1 both are positioned near the forward end of the panel 4 and the movement and function of these mechanisms is controlled by the movement of an operating part 6, in this case a push/pull cable that can slide in the guide rail 5 and which is driven by, for example, an electric motor (not shown). This is known from the state of the art and will not be explained in further detail here.

The roof system further is provided with tilting mechanisms T cooperating with each of the guide rails 5 and the panel 4 for moving (lifting) the panel (with its rearward end) to the tilted position, as well as second locking mechanisms L2 cooperating with each of the guide rails 5 and the tilting mechanisms for maintaining the tilting mechanisms in a position in which the rear end of the panel is lifted to the tilted position (in which locked position the panel 4 next can shift, as driven by the front mechanisms F, to the rear relative to the tilting mechanisms which then remain substantially stationary). Although a second locking mechanism L2 is shown for each guide rail 5, it also is possible to use a single second locking mechanism at one of the guide rails 5 only.

The tilting mechanism T and cooperating second locking mechanism L2 both are positioned near the rear end of the panel 4 and the movement and function of these mechanisms is controlled by the movement of the same operating part 6. This also is well-known known from the state of the art and will not be explained in further detail here.

The operating part 6 is responsible for in a specific timed manner causing the operation of the front mechanism, first locking mechanism, tilting mechanism and second locking mechanism, such that the panel 4, starting from its closed position, for example firstly moves to the tilted position, next to a position with also its forward end lifted and finally to its fully opened position, during which sequence the first and second locking mechanisms L1 and L2 lock and unlock at appropriate times. Other sequences are conceivable too, however.

Although in figures 3 and 4 the mechanisms F, L1, T and L2 are represented as separate units, it also is conceivable that mechanisms F and L1 are combined into a single unit, as applies too for mechanisms T and L2.

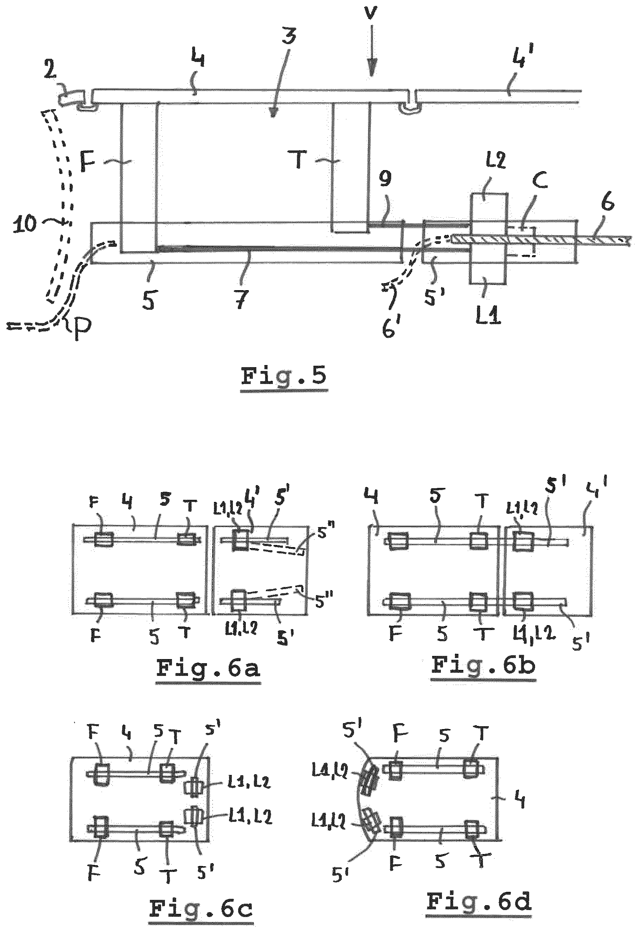

Now referring to figure 5, a schematic side elevational view (according to the view in figure 4) is shown of an embodiment of a roof system in accordance with the present invention.

In accordance with the present invention the front mechanism F and the first locking mechanism L1 now are separate mechanisms (as regarding their respective locations). The front mechanism F obviously has the same position as in figure 4, but the first locking mechanism L1 now is located at a guide rail section 5' located completely rearward of and remote of the tilting mechanism T, specifically underneath the fixed panel 4' and rearward of the roof opening 3. The guide rail section 5' is separated from the guide rail 5 (but in an alternative embodiment also may be connected thereto).

The first locking mechanism L1 is operatively connected to the front mechanism F by a first link 7 which preferably extends through the guide rail section 5' and through the guide rail 5.

In this embodiment the first link 7 also will act as the operating part for the front mechanism F, such that at the front mechanism the original operating part 6 can be dispensed with or may not be connected to the front mechanism F.

In an alternative embodiment (not shown) the operating member 6 still connects to the forward mechanism F for causing the desired movement thereof (and of the panel 4), whereas the first link 7, when locked at its end connected to the first locking mechanism L1, is able to lock the front mechanism F (and thus indirectly the panel 4) against a movement.

The timed operation of the first locking mechanism L1 (also in relation to the operation of the front mechanism F) between locking and unlocking is caused directly by the operating part 6 (or through a control member C operated by the operating part 6).

Because the first locking mechanism L1 is no longer positioned at (or is no longer integrated into) the forward mechanism F, the resulting mechanism at such location can be constructed with a reduced height (it is noted that due to the schematic nature of the enclosed figures such a reduced height is not illustrated).

Further, in accordance with the present invention, the tilting mechanism T (which has the same position as in figure 4) and the second locking mechanism L2 likewise are separate mechanisms (regarding their respective locations), and the second locking mechanism also is located at said guide rail section 5'. The timed operation of the second locking mechanism L2 (also in relation to the operation of the tilting mechanism) between locking and unlocking also is caused by the operating part 6 (directly or through the control member C operated by the operating part 6).

The second locking mechanism L2 is operatively connected to the panel by a second link 9 which preferably extends through the guide rail section 5' and through the guide rail 5 and which is connected to the tilting mechanism T.

In the illustrated embodiment the second link 9 also defines (or takes over the function of) the operating part 6 vis-à-vis the tilting mechanism T.

In an alternative embodiment the operating part 6 may still be responsible for driving the tilting mechanism T while the second link 9 (as controlled at its respective end by the second locking mechanism L2) is responsible for the locking and unlocking of the tilting mechanism T.

Because the second locking mechanism L2 is no longer positioned at (or is no longer integrated into) the tilting mechanism T, the resulting mechanism at such location can be constructed with a reduced height.

In the illustrated embodiment the first and second locking mechanisms L1 and L2 are positioned adjacent each other, and it is conceivable that they are combined into a single unit offering both locking functions. They also can be combined with the control member C, if provided).

The guide rail section 5' not necessarily has to be separated from the guide rail 5 as illustrated in figure 5, but also may be an (integral or joined) prolongation of the guide rail 5. However, when these guide rail parts are separated by a gap, the operating part 6 (or a branch thereof) may be routed through said gap (see operating part 6' in figure 5) to a desired location, for example to a driving source such as an electric motor. This also can prevent a complicated tortuous route (see route P in figure 5) of the operating part at the forward end of the roof opening 3 underneath a wind deflector 10 (indicated in part and schematically in broken lines in a stored position) ahead of the roof opening 3.

Most generally, the guide rail section 5' and the guide rail 5 will extend in line with each other. However, it is conceivable too that (especially when seen in a top plan view according to direction V in figure 5) the guide rail section 5' and the guide rail 5 extend at an angle with respect to each other, said angle being different from 0 or 180 degrees (see below figures 6a, 6c and 6d).

Features of a number of different embodiments of the roof system in accordance with the present invention are illustrated in figure 6 (showing a number of extremely schematical top plan views).

In figure 6a an embodiment according to figure 5 is illustrated, in which the guide rail 5 and guide rail section 5' extend in line of each other and are physically separated. In broken lines an alternative, inwardly inclined orientation of the guide rail sections 5" is shown, for example for coping with a narrowing shape of the roof in a rearward direction. In figure 6b a similar configuration in line with each other is shown, however here guide rail 5 and guide rail section 5' are joined (or define a single, integral, guide rail).

The guide rail sections 5' in each case are located outside the boundaries of the roof opening 3 (which substantially coincides with the outline of panel 4) and rearward of the roof opening, as well as below the fixed panel 4' (or fixed roof 2 when such a fixed panel 4' is missing). A position ahead of the roof opening 3 (below the fixed roof 2) is possible as well.

Figure 6c illustrates an embodiment in which the guide rail sections 5', as seen in a top plan view, are located inside the boundaries of the roof opening and near to the rearward edge of the roof opening. Furthermore, these guide rail sections 5' include an angle (in this case of about 90 degrees) with the guide rails 5. Of course, a position near to the forward edge of the roof opening is conceivable as well, see figure 6d. The angle included here differs from 90 degrees because the guide rail sections 5' substantially follow a curved frontal contour of the panel 4 (and roof opening). These two embodiments in particular are suited for a situation in which the fixed panel 4' is absent.

In the roof system described above a large number of members will be provided which are required for obtaining the desired (relative) movements of the constitutive parts of the roof system, such as, for example, cooperating curved tracks, cams, and levers, as will be apparent for persons skilled in the art. For understanding the present invention, a detailed description of such members, however, is not required.

The invention is not limited to the embodiments described which may be varied widely within the scope of the invention as defined by the appending claims.

## Claims

1. Roof system for a vehicle (1) having a roof opening (3) in its fixed roof (2), comprising:
(a) two guide rails extending in a longitudinal direction of said vehicle (1) at opposite lateral sides of the roof opening (3),
(b) a panel (4) which is movable relative to the guide rails between a closed position in which the roof opening (3) is closed, a tilted position in which a rear end of the panel (4) is lifted and a fully opened position in which also the forward end of the panel (4) is lifted and the panel (4) is shifted to the rear over the fixed roof (2), 1
(cl) a front mechanism cooperating with the guide rails and the panel (4) for lifting the forward end of the panel (4) and for shifting the panel (4) to the rear,
(c2) a first locking mechanism (L1) cooperating with the guide rails and the front mechanism for maintaining the panel (4) in its closed position,
(d1) a tilting mechanism cooperating with the guide rails and the panel (4) for moving the panel (4) to the tilted position,
(d2) a second locking mechanism (L2) cooperating with the guide rails and the tilting mechanism for maintaining the tilting mechanism in a position in which the rear end of the panel (4) is lifted to the tilted position,
(e) at least one operating part (6) which is movable in one of the guide rails and which is responsible for in a specific timed manner causing the operation of the front mechanism, first locking mechanism (L1), tilting mechanism and second locking mechanism (L2) such that the panel (4), starting from its closed position, firstly moves to the tilted position, next to a position with also its forward end lifted and finally to its fully opened position,
**characterized in that** the front mechanism and the first locking mechanism (L1) are separate mechanisms, wherein the first locking mechanism (L1) is located at a guide rail section (5') located completely ahead of and remote from the front mechanism or located completely rearward of and remote of the tilting mechanism, and wherein the first locking mechanism (L1) is operatively connected to the front mechanism by a first link (7).

2. Roof system according to claim 1, **characterized in that** the tilting mechanism and the second locking mechanism (L2) are separate mechanisms, wherein the second locking mechanism (L2) is located at a guide rail section (5') located completely ahead of and remote from the front mechanism or located completely rearward of and remote of the tilting mechanism,
and wherein the second locking mechanism (L2) is operatively connected to the tilting mechanism by a second link (9).

3. Roof system according to claim 1 or 2, wherein the first link (7) also defines the operating part (6) for the front mechanism and/or wherein the second link (9) also defines the operating part (6) for the tilting mechanism, respectively.

4. Roof system according to claim 1, 2 or 3, wherein the first locking mechanism (L1) and the second locking mechanism (L2) are located at the same guide rail section (5').

5. Roof system according to one of the previous claims, wherein said guide rail section (5') is a prolongation of the guide rail (5).

6. Roof system according to one of the claims 1-4, wherein said guide rail section (5') and the guide rail (5) are separate parts with a gap therebetween.

7. Roof system according to any of the previous claims, wherein the guide rail section (5') and the guide rail (5) extend in line with each other.

8. Roof system according to any of the claims 1-6, wherein the guide rail section (5') and the guide rail (5) extend at an angle with respect to each other, said angle being different from 0 or 180 degrees.

9. Roof system according to any of the previous claims, wherein said guide rail section (5'), as seen in a top plan view, is located outside the boundaries of the roof opening (3) and wherein preferably said guide rail section (5'), as seen in a top plan view, is located rearward of the roof opening (3).

10. Roof system according to any of the claims 1-8, wherein said guide rail section (5'), as seen in a top plan view, is located inside the boundaries of the roof opening (3) and preferably near to the forward or rearward edge of the roof opening (3).

11. Roof system according to any of the previous claims, wherein at least two of the front mechanism, first locking mechanism (L1), tilting mechanism and second locking mechanism (L2) share a common operating part (6).

12. Roof system according to any of the previous claims, wherein the operating part (6) is one of a group at least comprising a spindle motor, a linear motor and a drive cable driven by an electric motor.

13. Roof system according to any of the previous claims, wherein the front mechanism and/or the first locking mechanism (L1) and/or the tilting mechanism and/or the second locking mechanism (L2) comprise(s) cooperating curved tracks and cams.

14. Roof system according to any of the previous claims, wherein the first link (7) and/or the second link (9) comprise(s) one of a group at least comprising a push/pull cable and a rod

15. Roof system according to claim 6, having a drive motor in front of the roof opening (3), wherein the operating part (6) is a push/pull cable and enters the guide rail (5) at the gap between the guide rail section (5') and the guide rail (5).

## Patentansprüche

1. Dachsystem für ein Fahrzeug (1), das eine Dachöffnung (3) in seinem Festdach (2) hat, aufweisend:
(a) zwei Führungsschienen, die sich in einer Längsrichtung des Fahrzeugs (1) an gegenüberliegenden seitlichen Seiten der Dachöffnung (3) erstrecken,
(b) ein Paneel (4), das relativ zu den Führungsschienen bewegbar ist zwischen einer geschlossen-Position, in der die Dachöffnung (3) geschlossen ist, einer gekippt-Position, in der ein hinteres Ende des Paneels (4) angehoben ist, und einer vollständig-geöffnet-Position, in der auch das vordere Ende des Paneels (4) angehoben ist und das Paneel (4) nach hinten über das Festdach (2) verschoben ist,
(c1) einen mit den Führungsschienen und dem Paneel (4) zusammenwirkenden vorderen Mechanismus zum Anheben des vorderen Endes des Paneels (4) und zum Verschieben des Paneels (4) nach hinten,
(c2) einen ersten Verriegelungsmechanismus (L1), der mit den Führungsschienen und dem vorderen Mechanismus zusammenwirkt zum Halten des Paneels (4) in dessen geschlossen-Position, (d1) einen mit den Führungsschienen und dem Paneel (4) zusammenwirkenden Kippmechanismus zum Bewegen des Paneels (4) in die gekippt-Position,
(d2) einen mit den Führungsschienen und dem Kippmechanismus zusammenwirkenden zweiten Verriegelungsmechanismus (L2) zum Halten des Kippmechanismus in einer Position, in der das hintere Ende des Paneels (4) in die gekippt-Position angehoben ist,
(e) mindestens ein Betätigungsteil (6), das in einer der Führungsschienen bewegbar ist und das dafür zuständig ist, in einer bestimmten zeitlichen Abfolge die Betätigung des vorderen Mechanismus, des ersten Verriegelungsmechanismus (L1), des Kippmechanismus und des zweiten Verriegelungsmechanismus (L2) zu bewirken, sodass sich das Paneel (4) ausgehend von seiner geschlossen-Position zunächst in die gekippt-Position, anschließend in eine Position, in der auch sein vorderes Ende angehoben ist, und schließlich in seine vollständig- geöffnet-Position bewegt,
**dadurch gekennzeichnet, dass** der vordere Mechanismus und der erste Verriegelungsmechanismus (L1) separate Mechanismen sind, wobei sich der erste Verriegelungsmechanismus (L1) an einem Führungsschienenabschnitt (5') befindet, der vollständig vor und entfernt vom vorderen Mechanismus oder vollständig hinter und entfernt vom Kippmechanismus angeordnet ist, und wobei der erste Verriegelungsmechanismus (L1) über ein erstes Verbindungsglied (7) mit dem vorderen Mechanismus betriebsverbunden ist.

2. Dachsystem nach Anspruch 1, **dadurch gekennzeichnet, dass** der Kippmechanismus und der zweite Verriegelungsmechanismus (L2) separate Mechanismen sind, wobei der zweite Verriegelungsmechanismus (L2) an einem Führungsschienenabschnitt (5') angeordnet ist, der entweder vollständig vor und entfernt vom vorderen Mechanismus oder vollständig hinter und entfernt vom Kippmechanismus angeordnet ist, und wobei der zweite Verriegelungsmechanismus (L2) über ein zweites Verbindungsglied (9) mit dem Kippmechanismus betriebsverbunden ist.

3. Dachsystem nach Anspruch 1 oder 2, wobei das erste Verbindungsglied (7) auch das Betätigungsteil (6) für den vorderen Mechanismus bildet und/oder wobei das zweite Verbindungsglied (9) auch das Betätigungsteil (6) für den Kippmechanismus bildet.

4. Dachsystem nach Anspruch 1, 2 oder 3, wobei der erste Verriegelungsmechanismus (L1) und der zweite Verriegelungsmechanismus (L2) an demselben Führungsschienenabschnitt (5') angeordnet sind.

5. Dachsystem nach einem der vorstehenden Ansprüche, wobei der Führungsschienenabschnitt (5') eine Verlängerung der Führungsschiene (5) ist.

6. Dachsystem nach einem der Ansprüche 1-4,
wobei der Führungsschienenabschnitt (5') und die Führungsschiene (5) separate Teile sind, zwischen denen ein Spalt vorliegt.

7. Dachsystem nach einem der vorstehenden Ansprüche, wobei sich der Führungsschienenabschnitt (5') und die Führungsschiene (5) in einer Linie zueinander erstrecken.

8. Dachsystem nach einem der Ansprüche 1-6, wobei sich der Führungsschienenabschnitt (5') und die Führungsschiene (5) in einem Winkel zueinander erstrecken, wobei dieser Winkel von 0 oder 180 Grad verschieden ist.

9. Dachsystem nach einem der vorstehenden Ansprüche, wobei sich der Führungsschienenabschnitt (5'), in Draufsicht betrachtet, außerhalb der Begrenzungen der Dachöffnung (3) befindet und wobei sich der Führungsschienenabschnitt (5'), in Draufsicht betrachtet, vorzugsweise hinter der Dachöffnung (3) befindet.

10. Dachsystem nach einem der Ansprüche 1-8, wobei sich der Führungsschienenabschnitt (5'), in Draufsicht betrachtet, innerhalb der Begrenzungen der Dachöffnung (3) und vorzugsweise nahe dem vorderen oder dem hinteren Rand der Dachöffnung (3) befindet.

11. Dachsystem nach einem der vorstehenden Ansprüche, wobei mindestens zwei von dem vorderen Mechanismus, dem ersten Verriegelungsmechanismus (L1), dem Kippmechanismus und dem zweiten Verriegelungsmechanismus (L2) sich ein gemeinsames Betätigungsteil (6) teilen.

12. Dachsystem nach einem der vorstehenden Ansprüche, wobei das Betätigungsteil (6) eines aus einer Gruppe ist, die mindestens einen Spindelmotor, einen Linearmotor und ein von einem Elektromotor angetriebenes Antriebsseil aufweist.

13. Dachsystem nach einem der vorstehenden Ansprüche, wobei der vordere Mechanismus und/oder der erste Verriegelungsmechanismus (L1) und/oder der Kippmechanismus und/oder der zweite Verriegelungsmechanismus (L2) zusammenwirkende gekrümmte Bahnen und Vorsprünge aufweist/aufweisen.

14. Dachsystem nach einem der vorstehenden Ansprüche, wobei das erste Verbindungsglied (7) und/oder das zweite Verbindungsglied (9) eines aus einer Gruppe aufweisen/aufweist, die mindestens ein Zug/Druck-Seil und eine Stange aufweist.

15. Dachsystem nach Anspruch 6, mit einem Antriebsmotor vor der Dachöffnung (3), wobei das Betätigungsteil (6) ein Zug/Druck-Seil ist und an der Lücke zwischen dem Führungsschienenabschnitt (5') und der Führungsschiene (5) in die Führungsschiene (5) eintritt.

## Revendications

1. Système de toit pour un véhicule (1) ayant une ouverture de toit (3) dans son toit fixe (2), comprenant :
(a) deux rails de guidage s'étendant dans une direction longitudinale dudit véhicule (1) sur des côtés latéraux opposés de l'ouverture de toit (3),
(b) un panneau (4) qui est mobile par rapport aux rails de guidage entre une position fermée dans laquelle l'ouverture de toit (3) est fermée, une position inclinée dans laquelle une extrémité arrière du panneau (4) est soulevée et une position complètement ouverte dans laquelle l'extrémité avant du panneau (4) est également soulevée et le panneau (4) est décalé vers l'arrière au-dessus du toit fixe (2),
(c1) un mécanisme avant coopérant avec les rails de guidage et le panneau (4) pour soulever l'extrémité avant du panneau (4) et pour décaler le panneau (4) vers l'arrière, (c2) un premier mécanisme de verrouillage (L1) coopérant avec les rails de guidage et le mécanisme avant pour maintenir le panneau (4) dans sa position fermée,
(d1) un mécanisme d'inclinaison coopérant avec les rails de guidage et le panneau (4) pour déplacer le panneau (4) vers la position inclinée,
(d2) un second mécanisme de verrouillage (L2) coopérant avec les rails de guidage et le mécanisme d'inclinaison pour maintenir le mécanisme d'inclinaison dans une position dans laquelle l'extrémité arrière du panneau (4) est soulevée jusqu'à position inclinée,
(e) au moins une partie fonctionnelle (6) qui est mobile dans l'un des rails de guidage et qui est responsable d'entraîner, d'une manière minutée spécifique, le fonctionnement du mécanisme avant, du premier mécanisme de verrouillage (L1), du mécanisme d'inclinaison et du second mécanisme de verrouillage (L2) de sorte que le panneau (4), en partant de sa position fermée, se déplace d'abord vers la position inclinée, ensuite vers une position avec également son extrémité avant soulevée et enfin vers sa position complètement ouverte,
**caractérisé en ce que** le mécanisme avant et le premier mécanisme de verrouillage (L1) sont des mécanismes séparés, dans lequel le premier mécanisme de verrouillage (L1) est situé au niveau d'une section de rail de guidage (5') située complètement devant le mécanisme avant, et à distance de celui-ci, ou située complètement derrière le mécanisme d'inclinaison, et à distance de celui-ci, et dans lequel le premier mécanisme de verrouillage (L1) est connecté de manière fonctionnelle au mécanisme avant par une première liaison (7).

2. Système de toit selon la revendication 1,
**caractérisé en ce que** le mécanisme d'inclinaison et le second mécanisme de verrouillage (L2) sont des mécanismes séparés, dans lequel le second mécanisme de verrouillage (L2) est situé au niveau d'une section de rail de guidage (5') située complètement devant le mécanisme avant, et à distance de celui-ci, ou située complètement derrière le mécanisme d'inclinaison, et à distance de celui-ci, et dans lequel le second mécanisme de verrouillage (L2) est connecté de manière fonctionnelle au mécanisme d'inclinaison par une seconde liaison (9).

3. Système de toit selon la revendication 1 ou 2,
dans lequel la première liaison (7) définit également la partie fonctionnelle (6) pour le mécanisme avant et/ou dans lequel la seconde liaison (9) définit également la partie fonctionnelle (6) pour le mécanisme d'inclinaison, respectivement.

4. Système de toit selon la revendication 1, 2 ou 3, dans lequel le premier mécanisme de verrouillage (L1) et le second mécanisme de verrouillage (L2) sont situés au niveau de la même section de rail de guidage (5').

5. Système de toit selon l'une des revendications précédentes, dans lequel ladite section de rail de guidage (5') est une prolongation du rail de guidage (5).

6. Système de toit selon l'une des revendications 1 à 4, dans lequel ladite section de rail de guidage (5') et le rail de guidage (5) sont des parties séparées avec un espace entre eux.

7. Système de toit selon l'une quelconque des revendications précédentes, dans lequel la section de rail de guidage (5') et le rail de guidage (5) s'étendent en ligne l'un par rapport à l'autre.

8. Système de toit selon l'une quelconque des revendications 1 à 6, dans lequel la section de rail de guidage (5') et le rail de guidage (5) s'étendent selon un angle l'un par rapport à l'autre, ledit angle étant différent de 0 ou 180 degrés.

9. Système de toit selon l'une quelconque des revendications précédentes, dans lequel ladite section de rail de guidage (5'), comme observé sur une vue en plan de dessus, est située à l'extérieur des limites de l'ouverture de toit (3) et dans lequel de préférence ladite section de rail de guidage (5'), comme observé sur une vue en plan de dessus, est située à l'arrière de l'ouverture de toit (3).

10. Système de toit selon l'une quelconque des revendications 1 à 8, dans lequel ladite section de rail de guidage (5'), comme observé sur une vue en plan de dessus, est située à l'intérieur des limites de l'ouverture de toit (3) et de préférence à proximité du bord avant ou arrière de l'ouverture de toit (3).

11. Système de toit selon l'une quelconque des revendications précédentes, dans lequel au moins deux parmi le mécanisme avant, le premier mécanisme de verrouillage (L1), le mécanisme d'inclinaison et le second mécanisme de verrouillage (L2) partagent une partie fonctionnelle (6) commune.

12. Système de toit selon l'une quelconque des revendications précédentes, dans lequel la partie fonctionnelle (6) est l'un d'un groupe comprenant au moins un moteur à axe, un moteur linéaire et un câble d'entraînement entraîné par un moteur électrique.

13. Système de toit selon l'une quelconque des revendications précédentes, dans lequel le mécanisme avant et/ou le premier mécanisme de verrouillage (L1) et/ou le mécanisme d'inclinaison et/ou le second mécanisme de verrouillage (L2) comprennent des pistes incurvées et des cames coopérantes.

14. Système de toit selon l'une quelconque des revendications précédentes, dans lequel la première liaison (7) et/ou la seconde liaison (9) comprennent l'un d'un groupe comprenant au moins un câble de poussée/traction et une tige.

15. Système de toit selon la revendication 6, ayant un moteur d'entraînement devant l'ouverture de toit (3), dans lequel la partie fonctionnelle (6) est un câble de poussée/traction et pénètre dans le rail de guidage (5) au niveau de l'espace entre la section de rail de guidage (5') et le rail de guidage (5).
